# EUROPEAN PATENT APPLICATION

(11) **EP 4 579 906 A1**
(43) Date of publication of application: **02.07.2025**
(21) Application number: 23866653.1
(22) Date of filing: 30.10.2023
(51) Int. Cl.: H01M 50/204, H01M 50/244, H01M 50/247, H01M 50/502

(54) **BATTERY MOUNTING STRUCTURE, OUTDOOR MOBILE POWER SUPPLY AND ELECTRONIC ASSEMBLY**

(30) Priority: 13.10.2023 CN 202311330625
(71) Applicant: Shenzhen Gaojing Technology Co., Ltd., Shenzhen, Guangdong 518109 (CN)
(72) Inventor: LIAO, Zhuowen, Shenzhen Guangdong 518109 (CN); LIN, Shipei, Shenzhen Guangdong 518109 (CN); MIAO, Long, Shenzhen Guangdong 518109 (CN)
(74) Representative: Ipside
(86) International application number: PCT/CN2023/127987
(87) International publication number: WO 2025/076875

(57) **Abstract**

This disclosure reveals a battery installation structure, an outdoor portable power source, and an electronic component, which belong to the technical field of electronic components. The battery installation structure includes a telescopic component, a first battery module, and at least one second battery module. The first battery module is sleeved on the telescopic component; one second battery module is sleeved on the telescopic component and is electrically connected to the first battery module, and the remaining second battery modules are successively sleeved on the telescopic component along the axial direction of the telescopic component and are electrically connected in sequence. The battery installation structure provided by this disclosure allows users to freely increase or decrease the number of second battery modules according to actual power needs, thereby freely increasing or decreasing the battery capacity, enhancing the convenience of use and the portability of carrying.

## Description

### Cross-Reference to Related Applications

This disclosure claims priority to a Chinese patent application titled "A Battery Installation Structure, Outdoor Portable Power Source, and Electronic Component," application number 202311330625.X, filed with the China National Intellectual Property Administration on October 13, 2023, the entire contents of which are incorporated herein by reference.

### Technical Field

This disclosure relates to the technical field of electronic components, particularly to a battery installation structure, an outdoor portable power source, and an electronic component.

### Background Art

An outdoor portable power source is a special type of portable power supply mainly used for electrical power supply in outdoor environments. It typically uses high-capacity batteries as the energy source and can provide power to various outdoor devices such as camping lights, mobile phones, tablets, cameras, drones, GPS, speakers, etc.

Outdoor portable power sources are often used for outdoor travel and for various mobile devices. Therefore, compared to conventional portable power sources, they need to have a larger capacity, which means they contain more battery cells, making them heavier than conventional portable power sources.

However, most existing outdoor portable power sources have a fixed number of internal batteries, and users cannot freely increase or decrease the number of batteries according to actual power needs, leading to inconvenience in use and portability.

### Summary of the Invention

In view of this, the purpose of this disclosure is to overcome the deficiencies in the existing technology by providing a battery installation structure.

To solve the above technical problems, this disclosure provides:
A battery installation structure, comprising:
A telescopic component;
A first battery module, which is sleeved on the telescopic component;
At least one second battery module, where one second battery module is sleeved on the telescopic component and electrically connected to the first battery module, and the remaining second battery modules are successively sleeved on the telescopic component along its axial direction and electrically connected in sequence.

Furthermore, according to the battery installation structure of this disclosure, the following additional technical features may be included:
**In** some embodiments of this disclosure, the battery installation structure further includes a support component, with the first battery module being placed on the support component, and a part of the telescopic component located within the inner circumference of the support component.
**In** some embodiments of this disclosure, the battery installation structure further includes a base, with both the support component and the telescopic component being placed on the base.
**In** some embodiments of this disclosure, the first battery module has a first conductive part at one end near the second battery module, with one second battery module being sleeved on the telescopic component and electrically connected to the first conductive part, and the remaining second battery modules are successively sleeved on the telescopic component along its axial direction and electrically connected in sequence.
**In** some embodiments of this disclosure, the second battery module is provided with a second conductive part and a third conductive part, which are respectively located at both ends of the second battery module. One second battery module's second conductive part is electrically connected to the first conductive part, and its third conductive part is electrically connected to the second conductive part of an adjacent second battery module.
**In** some embodiments of this disclosure, the first battery module includes a first casing, a first battery, and a circuit board, with both the first battery and the circuit board being placed inside the first casing, and the first battery being electrically connected to both the circuit board and the first conductive part.
**In** some embodiments of this disclosure, the circuit board is equipped with a charging interface and a power button. The first casing has a first avoidance port that matches the charging interface and a second avoidance port that matches the power button.
**In** some embodiments of this disclosure, the second battery module includes a second casing and a second battery, with the second battery being placed inside the second casing and electrically connected to both the second conductive part and the third conductive part.

A second aspect of this disclosure provides an outdoor portable power source, including the battery installation structure described in any of the embodiments above.

A third aspect of this disclosure provides an electronic component, including an electronic device and the outdoor portable power source described in the embodiments above.

Compared to existing technology, the beneficial effects of this disclosure are:
This disclosure proposes a battery installation structure that includes a telescopic component, a first battery module, and at least one second battery module. By sleeving the first battery module on the telescopic component, a stable installation function for the first battery module is achieved. By sleeving one second battery module on the telescopic component and electrically connecting it to the first battery module, and successively sleeving the remaining second battery modules along the axial direction of the telescopic component and electrically connecting them in sequence, users can freely increase or decrease the number of second battery modules according to actual power needs, thereby freely increasing or decreasing the battery capacity. This enhances the convenience of use and portability. It avoids the technical problem in existing technology where the number of internal batteries in most outdoor portable power sources is fixed, and users cannot freely adjust the number of batteries according to actual power needs, leading to inconvenience in use and portability.

### Brief Description of the Drawings

To more clearly illustrate the technical solutions in the embodiments of this disclosure, the drawings needed for the embodiments will be briefly introduced below. It should be understood that the following drawings only show some embodiments of this disclosure and should not be taken as limiting the scope. For those of ordinary skill in the art, other related drawings can be obtained based on these drawings without creative efforts.
FIG. 1 shows a perspective view of the battery installation structure in some embodiments of this disclosure;
FIG. 2 shows a perspective view of the battery installation structure in FIG. 1 with the first battery module removed;
FIG. 3 shows a perspective view of the first battery module in some embodiments of this disclosure;
FIG. 4 shows a perspective view of the first battery module in FIG. 3 with the first casing removed;
FIG. 5 shows a perspective view of the electronic component in some embodiments of this disclosure.

### Reference numerals:

100-Battery installation structure; 110-Telescopic component; 120-First battery module; 121-First conductive part; 122-First casing; 1221-First avoidance port; 1222-Second avoidance port; 123-First battery; 124-Circuit board; 1241-Charging interface; 1242-Power button; 130-Support component; 140-Base; 1000-Outdoor portable power source; 10000-Electronic component; 2000-Electronic device.

### Detailed Description of Embodiments

The embodiments of this disclosure are described in detail below, with examples shown in the accompanying drawings, where the same or similar reference numbers denote the same or similar elements or elements with the same or similar functions throughout. The embodiments described by referring to the drawings are exemplary and are only used to explain this disclosure and should not be construed as limiting this disclosure.

In the description of this disclosure, it should be understood that terms such as "center," "longitudinal," "transverse," "length," "width," "thickness," "top," "bottom," "front," "back," "left," "right," "vertical," "horizontal," "top," "bottom," "inner," "outer," "clockwise," "counterclockwise," "axial," "radial," "circumferential," and so on, indicate orientations or positional relationships based on the orientations or positional relationships shown in the drawings. They are only for convenience in describing this disclosure and simplifying the description and do not indicate or imply that the devices or elements referred to must have a particular orientation, be constructed and operated in a particular orientation, and thus should not be construed as limiting this disclosure.

Furthermore, terms such as "first," "second," and so on are used for descriptive purposes only and should not be construed as indicating or implying relative importance or implicitly indicating the number of technical features indicated. Thus, features defined as "first," "second," and so on may explicitly or implicitly include one or more of such features. In the description of this disclosure, the meaning of "multiple" is two or more unless otherwise specifically defined.

In this disclosure, unless otherwise clearly defined and limited, terms such as "mounted," "connected," "connected," "fixed," and so on should be understood broadly. For example, they can be a fixed connection, a detachable connection, or an integral structure; they can be a mechanical connection or an electrical connection; they can be directly connected or indirectly connected through an intermediate medium, which can be the internal communication of two elements or the interaction between two elements. For those of ordinary skill in the art, the specific meanings of these terms in this disclosure can be understood according to specific situations.

In this disclosure, unless otherwise clearly defined and limited, the first feature "on" or "under" the second feature can mean that the first and second features are in direct contact or that the first and second features are not in direct contact but instead are indirectly connected through an intermediate medium. Moreover, the first feature "above," "above," and "on top of" the second feature can mean that the first feature is directly above or obliquely above the second feature, or simply that the first feature is higher than the second feature in terms of horizontal height. The first feature "below," "below," and "underneath" the second feature can mean that the first feature is directly below or obliquely below the second feature, or simply that the first feature is lower than the second feature in terms of horizontal height.

### Embodiment One

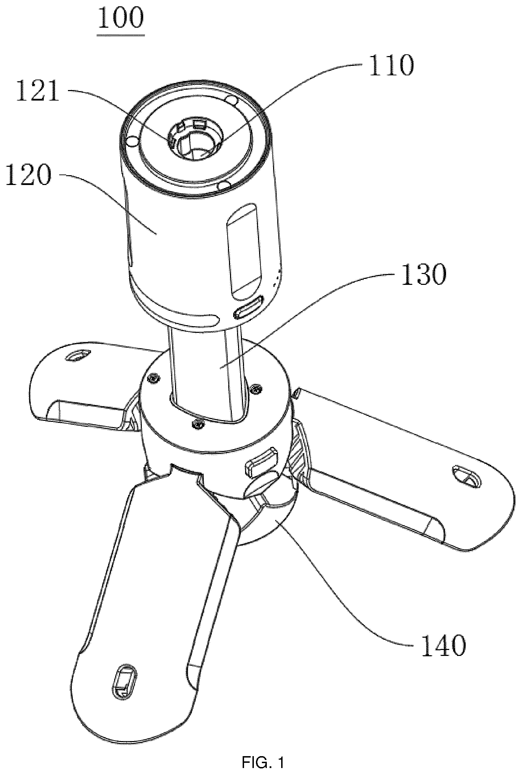

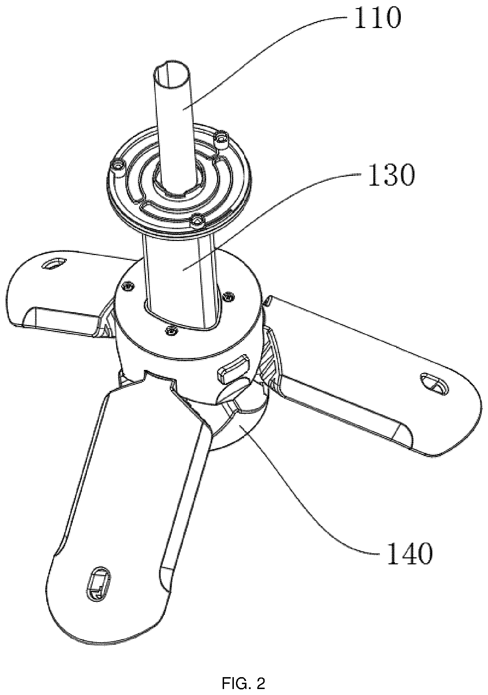

As shown in FIGS. 1 and 2, an embodiment of this disclosure provides a battery installation structure 100, mainly used in an outdoor portable power source 1000, which in turn is mainly used in an electronic component 10000. The battery installation structure 100 includes a telescopic component 110, a first battery module 120, and at least one second battery module (not shown in the figures).

Wherein, the first battery module 120 is sleeved on the telescopic component 110, one second battery module is sleeved on the telescopic component 110 and electrically connected to the first battery module 120, and the remaining second battery modules are successively sleeved on the telescopic component 110 along its axial direction and electrically connected in sequence.

The battery installation structure 100 provided in the embodiment of this disclosure, by sleeving the first battery module 120 on the telescopic component 110, achieves a stable installation function for the first battery module 120. By sleeving one second battery module on the telescopic component 110 and electrically connecting it to the first battery module 120, and successively sleeving the remaining second battery modules along the axial direction of the telescopic component 110 and electrically connecting them in sequence, users can freely increase or decrease the number of second battery modules according to actual power needs, thereby freely increasing or decreasing the battery capacity. This enhances the convenience of use and portability. It avoids the technical problem in existing technology where the number of internal batteries in most outdoor portable power sources is fixed, and users cannot freely adjust the number of batteries according to actual power needs, leading to inconvenience in use and portability.

As shown in FIGS. 1 and 2, in one embodiment of this disclosure, optionally, the battery installation structure 100 further includes a support component 130, with the first battery module 120 being placed on the support component 130, and a part of the telescopic component 110 located within the inner circumference of the support component 130.

In this embodiment, by placing the first battery module 120 on the support component 130, a supporting role is provided for the first battery module 120, thereby achieving a stable installation function for the first battery module 120. By placing a part of the telescopic component 110 within the inner circumference of the support component 130, a stable installation function for the telescopic component 110 is achieved, allowing the telescopic component 110 to extend out of or retract into the support component 130.

As shown in FIGS. 1 and 2, in the above embodiment of this disclosure, optionally, the battery installation structure 100 further includes a base 140, with both the support component 130 and the telescopic component 110 being placed on the base 140.

In this embodiment, by placing both the support component 130 and the telescopic component 110 on the base 140, a stable installation function is achieved for both the support component 130 and the telescopic component 110.

As shown in FIG. 1, in one embodiment of this disclosure, optionally, the first battery module 120 has a first conductive part 121 at one end near the second battery module, with one second battery module being sleeved on the telescopic component 110 and electrically connected to the first conductive part 121, and the remaining second battery modules are successively sleeved on the telescopic component 110 along its axial direction and electrically connected in sequence.

In this embodiment, by providing a first conductive part 121 at one end of the first battery module 120 near the second battery module, and sleeving one second battery module on the telescopic component 110 and electrically connecting it to the first conductive part 121, and successively sleeving the remaining second battery modules along the axial direction of the telescopic component 110 and electrically connecting them in sequence, users can flexibly increase or decrease the number of second battery modules according to actual power needs, thereby flexibly increasing or decreasing the battery capacity. This enhances the convenience of use and portability.

In the above embodiments of this disclosure, optionally, the second battery module is provided with a second conductive part and a third conductive part, which are respectively located at both ends of the second battery module. One second battery module's second conductive part is electrically connected to the first conductive part 121, and its third conductive part is electrically connected to the second conductive part of an adjacent second battery module.

In this embodiment, by providing a second conductive part and a third conductive part at both ends of the second battery module, and electrically connecting one second battery module's second conductive part to the first conductive part 121, and connecting its third conductive part to the second conductive part of an adjacent second battery module, a serial electrical connection is established between the first battery module 120 and multiple second battery modules, thereby expanding the battery capacity.

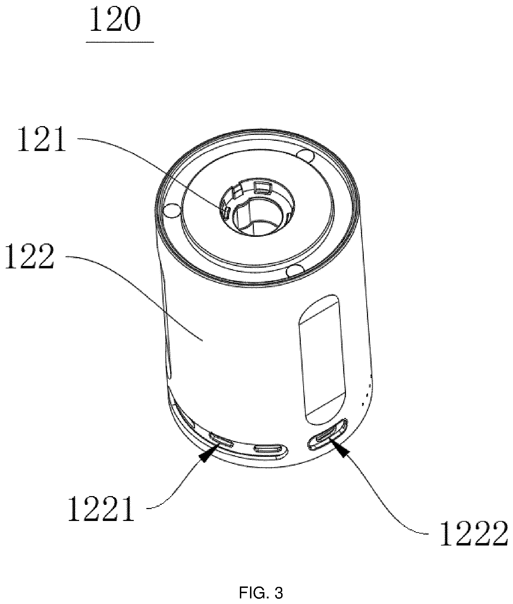

As shown in FIG. 3, in the above embodiments of this disclosure, optionally, the first battery module 120 includes a first casing 122, a first battery 123, and a circuit board 124, with both the first battery 123 and the circuit board 124 being placed inside the first casing 122, and the first battery 123 being electrically connected to both the circuit board 124 and the first conductive part 121.

In this embodiment, by placing both the first battery 123 and the circuit board 124 inside the first casing 122, protection is provided for the first battery 123 and the circuit board 124, preventing them from getting wet in outdoor use and causing short circuits and damage, thereby extending the product's lifespan. By electrically connecting the first battery 123 to both the circuit board 124 and the first conductive part 121, the circuit board 124 controls the charging and discharging of the first battery 123, and the first conductive part 121 electrically connects to the second battery module or other outdoor electrical devices.

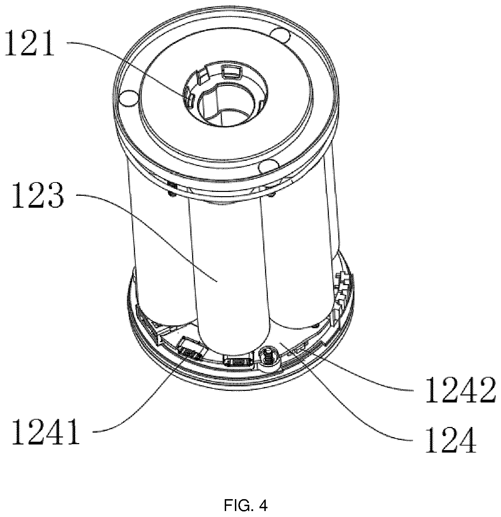

As shown in FIGS. 3 and 4, in the above embodiments of this disclosure, optionally, the circuit board 124 is equipped with a charging interface 1241 and a power button 1242. The first casing 122 has a first avoidance port 1221 that matches the charging interface 1241 and a second avoidance port 1222 that matches the power button 1242.

In this embodiment, by providing a charging interface 1241 on the circuit board 124 and a first avoidance port 1221 on the first casing 122 that matches the charging interface 1241, users can use a compatible cable to charge the first battery 123 and the second battery module, or use the first battery 123 and the second battery module to charge outdoor devices such as mobile phones.

By providing a power button 1242 on the circuit board 124 and a second avoidance port 1222 on the first casing 122 that matches the power button 1242, users can press the power button 1242 to turn on or off the first battery 123 and the second battery module.

In the above embodiments of this disclosure, optionally, the second battery module includes a second casing and a second battery, with the second battery being placed inside the second casing and electrically connected to both the second conductive part and the third conductive part.

In this embodiment, by placing the second battery inside the second casing, protection is provided for the second battery, preventing it from getting wet in outdoor use and causing short circuits and damage, thereby extending the product's lifespan. By electrically connecting the second battery to both the second conductive part and the third conductive part, a serial electrical connection is established between the first battery 123 and multiple second batteries, thereby expanding the battery capacity, and the terminal second battery can electrically connect to other outdoor electrical devices through its third conductive part.

### Embodiment Two

In a second embodiment of this disclosure, an outdoor portable power source 1000 is provided, including the battery installation structure 100 described in any of the embodiments of Embodiment One.

This outdoor portable power source 1000 has the battery installation structure 100 described in Embodiment One, and therefore has all the beneficial effects described in Embodiment One, which are not reiterated here.

### Embodiment Three

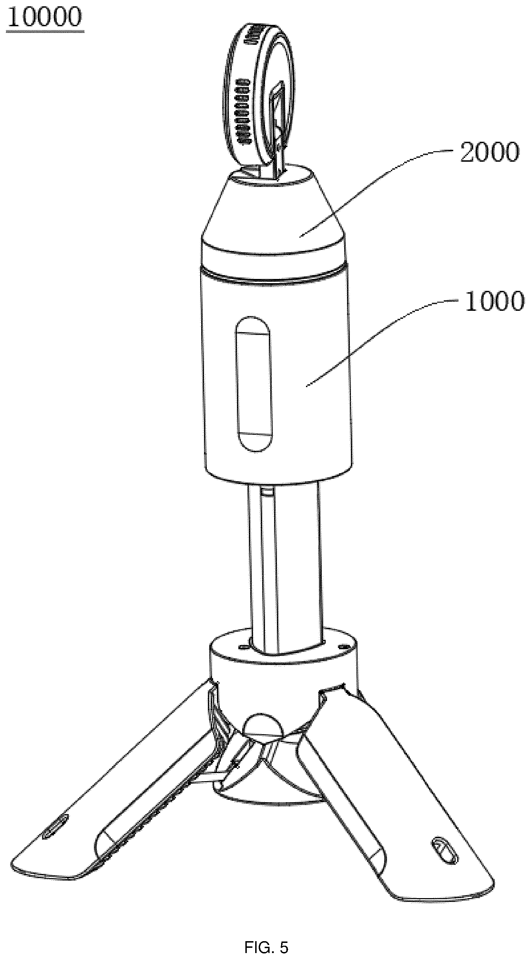

As shown in FIG. 5, a third embodiment of this disclosure provides an electronic component 10000, including an electronic device 2000 and the outdoor portable power source 1000 described in Embodiment Two.

The electronic device 2000 can be a camping light, a wireless charging device, a mosquito repellent device, etc.

This electronic component 10000 has the outdoor portable power source 1000 described in Embodiment Two, and therefore has all the beneficial effects described in Embodiment Two, which are not reiterated here.

In summary, this disclosure proposes a battery installation structure 100, which includes a telescopic component 110, a first battery module 120, and at least one second battery module. By sleeving the first battery module 120 on the telescopic component 110, a stable installation function for the first battery module 120 is achieved. By sleeving one second battery module on the telescopic component 110 and electrically connecting it to the first battery module 120, and successively sleeving the remaining second battery modules along the axial direction of the telescopic component 110 and electrically connecting them in sequence, users can freely increase or decrease the number of second battery modules according to actual power needs, thereby freely increasing or decreasing the battery capacity. This enhances the convenience of use and portability. It avoids the technical problem in existing technology where the number of internal batteries in most outdoor portable power sources is fixed, and users cannot freely adjust the number of batteries according to actual power needs, leading to inconvenience in use and portability.

In the description of this specification, the terms "an embodiment," "some embodiments," "example," "specific examples," or "some examples" etc., refer to specific features, structures, materials, or characteristics included in at least one embodiment or example of this disclosure. In this specification, the schematic expression of the above terms does not necessarily refer to the same embodiment or example. Moreover, the described specific features, structures, materials, or characteristics may be combined in any suitable manner in one or more embodiments or examples. Furthermore, without conflicting, those skilled in the art can combine and combine the different embodiments or examples and the features of different embodiments or examples described in this specification.

Although the embodiments of this disclosure have been shown and described, it is understood that the above embodiments are exemplary and should not be considered as limiting the disclosure. Those of ordinary skill in the art can make changes, modifications, substitutions, and variations to the above-described embodiments within the scope of this disclosure.

### Industrial Applicability

This disclosure proposes a battery installation structure, which includes a telescopic component, a first battery module, and at least one second battery module. By sleeving the first battery module on the telescopic component, a stable installation function for the first battery module is achieved. By sleeving one second battery module on the telescopic component and electrically connecting it to the first battery module, and successively sleeving the remaining second battery modules along the axial direction of the telescopic component and electrically connecting them in sequence, users can freely increase or decrease the number of second battery modules according to actual power needs, thereby freely increasing or decreasing the battery capacity. This enhances the convenience of use and portability. It avoids the technical problem in existing technology where the number of internal batteries in most outdoor portable power sources is fixed, and users cannot freely adjust the number of batteries according to actual power needs, leading to inconvenience in use and portability.

Furthermore, it is understood that the battery installation structure provided by this disclosure is reproducible and can be used in various industrial applications. For example, the battery installation structure provided by this disclosure can be used in the field of electronic components.

## Claims

1. A battery installation structure, **characterized by** comprising:
a telescopic component;
a first battery module, wherein the first battery module is sleeved on the telescopic component;
at least one second battery module, wherein one second battery module is sleeved on the telescopic component and is electrically connected to the first battery module, and the remaining second battery modules are successively sleeved on the telescopic component along the axial direction of the telescopic component and are electrically connected in sequence.

2. The battery installation structure according to claim 1, **characterized in that** the battery installation structure further comprises a support component, wherein the first battery module is set on the support component, and a part of the telescopic component is located within the inner periphery of the support component.

3. The battery installation structure according to claim 2, **characterized in that** the battery installation structure further comprises a base, wherein the support component and the telescopic component are both set on the base.

4. The battery installation structure according to claim 1, **characterized in that** the first battery module has a first conductive part at one end near the second battery module, wherein one second battery module is sleeved on the telescopic component and is electrically connected to the first conductive part, and the remaining second battery modules are successively sleeved on the telescopic component along the axial direction of the telescopic component and are electrically connected in sequence.

5. The battery installation structure according to claim 4, **characterized in that** the second battery module is provided with a second conductive part and a third conductive part, wherein the second conductive part and the third conductive part are respectively set at both ends of the second battery module, a second conductive part of one second battery module is electrically connected to the first conductive part, and a third conductive part of one second battery module is electrically connected to the second conductive part of an adjacent second battery module.

6. The battery installation structure according to claim 4, **characterized in that** the first battery module comprises a first casing, a first battery, and a circuit board, wherein the first battery and the circuit board are both set within the first casing, and the first battery is electrically connected to both the circuit board and the first conductive part.

7. The battery installation structure according to claim 6, **characterized in that** the circuit board is provided with a charging interface and a power button, the first casing has a first avoidance port adapted to the charging interface, and has a second avoidance port adapted to the power button.

8. The battery installation structure according to claim 5, **characterized in that** the second battery module comprises a second casing and a second battery, wherein the second battery is set within the second casing, and is electrically connected to both the second conductive part and the third conductive part.

9. An outdoor portable power source, **characterized by** comprising the battery installation structure according to any one of claims 1 to 8.

10. An electronic component, **characterized by** comprising an electronic device and the outdoor portable power source according to claim 9.
